# EUROPEAN PATENT SPECIFICATION

(11) **EP 3 702 192 B1**
(45) Date of publication and mention of the grant of the patent: **28.07.2021**
(21) Application number: 19213482.3
(22) Date of filing: 04.12.2019
(51) Int. Cl.: B60K 35/00, B60K 37/00, B60K 37/04, B60R 11/00, B60R 11/02

(54) **VEHICLE WITH DASHBOARD ADAPTED TO BE CONFIGURED BY THE END USER**
FAHRZEUG MIT ARMATURENBRETT, DAS VOM ENDBENUTZER KONFIGURIERT WERDEN KANN
VÉHICULE AVEC TABLEAU DE BORD ADAPTÉ POUR ÊTRE CONFIGURÉ PAR L'UTILISATEUR FINAL

(30) Priority: 01.03.2019 IT 201900002999
(43) Date of publication of application: 02.09.2020
(73) Proprietor: FCA Italy S.p.A., 10135 Torino (IT)
(72) Inventor: WUPPINGER, Andreas, I-10135 Torino (IT); LONGO, Michele, I-10135 Torino (IT); DILILLO, Alberto, I-10135 Torino (IT)
(74) Representative: Notaro, Giancarlo

(56) References cited:
- DE-A1-102011 010 850
- US-A1- 2002 158 512
- US-A1- 2008 179 478

## Description

The present invention is directed to a vehicle dashboard, in particular for an electric vehicle of the "city car" category.

A vehicle according to the preamble of claim 1 is known from US 2002/158512 A1. Other similar solutions are known from documents DE 10 2011 010850 and US 2008/179478 A1.

The object of the invention is that of proposing a new design philosophy for the dashboard, aimed to obtain a component which on one hand has a pleasant and attractive aesthetic appearance, and on the other hand is extremely functional in its use and gives the end user the possibility to reconfigure the component according to his specific needs.

Also a further object lies in that of providing a dashboard of the above indicated type which is of simple and inexpensive construction.

In view of achieving these and further objects, the invention provides a vehicle having the features of claim 1.

The above-mentioned kit of accessories may comprise accessories of various type, among which trinket containers, a container for supporting an audio unit provided for wireless connection to a sound source, a support for a cellular apparatus, a smartphone apparatus, tablet or the like, a support arm for a videocamera, a document holder, a bottle container, an ashtray, and the like.

In the above mentioned preferred embodiment, to the dashboard there is associated an instrument panel in the form of a separate unit supported by a support arm above, and at a distance from, the dashboard structure.

Further features and advantages of the invention will become apparent from the description which follows with reference to the annexed drawings, given purely by way of non-limiting example, in which:
- figure 1 is a front view of a preferred embodiment of a vehicle dashboard, according to the present invention,
- figure 2 is a view of the side facing forwardly, with reference to the direction of movement of the vehicle, of the instrument panel associated to the vehicle dashboard,
- figure 3 is a perspective view of the dashboard structure, with the arm for supporting the instrument panel,

- figures 4-6 are a perspective view, a rearview and an exploded view of a unit constituted by a supporting container and an audio unit received within said supporting container, and
- figures 7-9 are a perspective view of the dashboard provided with a support for a container for objects, a perspective view of the above-mentioned support with the container associated thereto, and figure 9 is an exploded perspective view of the unit of figure 8.

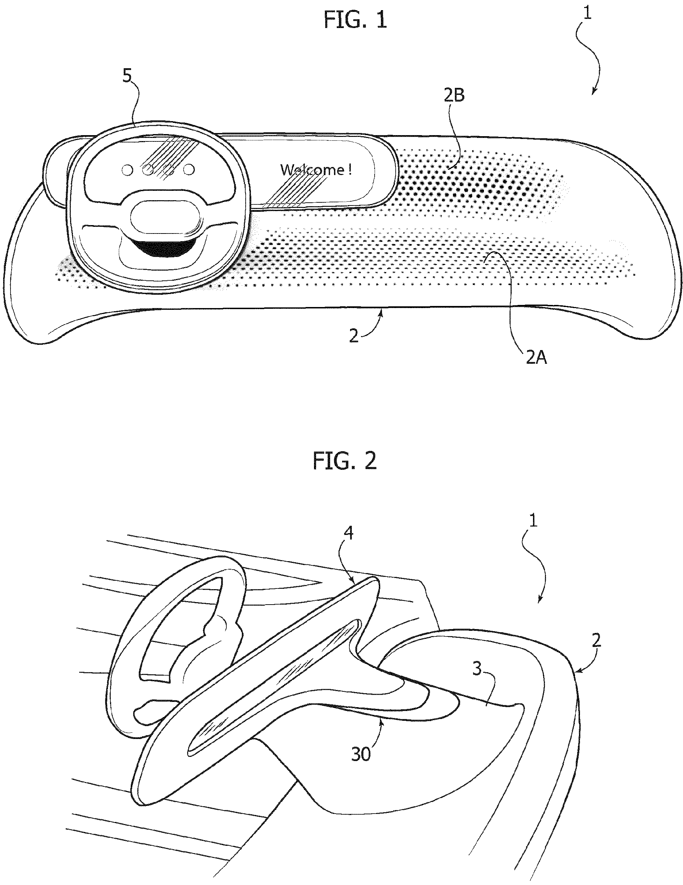

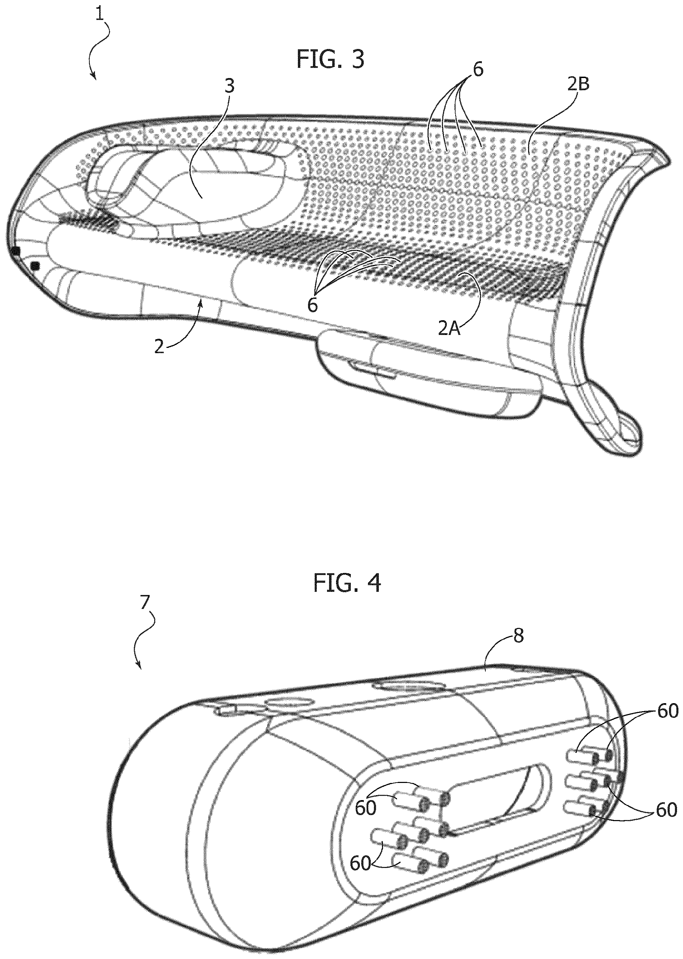

With reference to figure 1, numeral 1 generally designates a vehicle dashboard, for example for an electric vehicle of the "city car" category. The dashboard 1 includes a main wall 2 whose structure is better visible in figure 3.

The wall 2 can be made of any suitable material (for example plastic material).

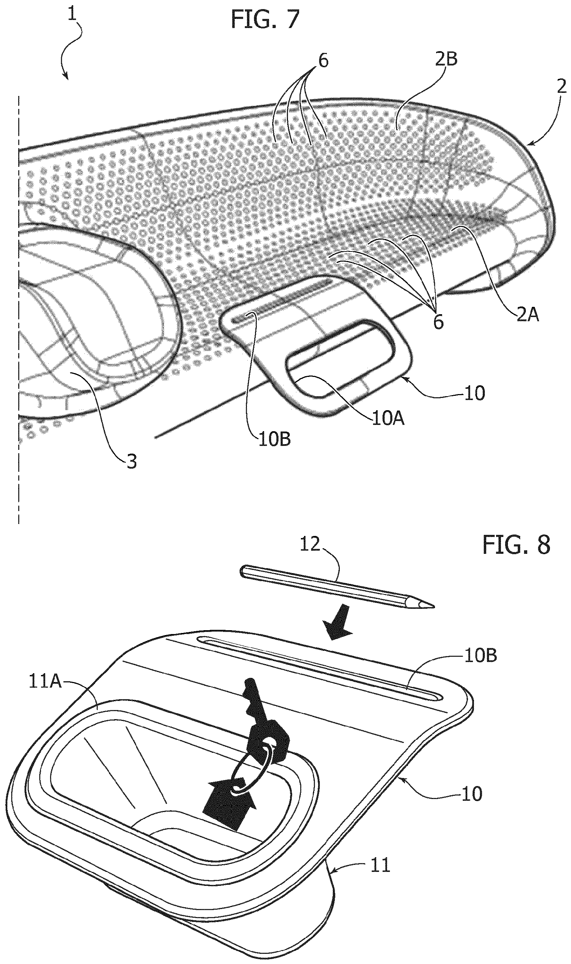

In the specific example illustrated herein, the dashboard is shaped so as to define an extended support surface 2A which is substantially planar and horizontal, this surface extending at its front side and at its two lateral sides into a surface 2B progressively rising upwardly, according to a curved profile having its concavity facing towards the vehicle passenger compartment. As visible also in figures 1 and 7, the overall effect is an "amphitheater" effect, with an extended horizontal supporting surface 2A and the above-mentioned wall 2B rising upwardly, which confines the support surface at its front side and at its two lateral sides. Naturally, this specific configuration is given herein purely by way of non-limiting example.

From wall 2 there extends a structure 3 surrounding the steering shaft of the vehicle (not visible in the drawings) to which the steering wheel 5 is associated (figure 1). On the support 3 there is secured a support arm 30 which supports a separate unit 4 constituting the instrument panel of the dashboard, above, and spaced apart from, the dashboard.

According to an important feature of the invention, the main wall 2 of the dashboard 1 has, at the horizontal support surface 2A and the surface 2B which extends upwardly from the horizontal surface 2A, a predetermined array of holes 6 arranged for receiving and locking coupling pins 60 of a plurality of accessories of the dashboard, so that the dashboard can be configured by the user by positioning one or more of said accessories at positions which can be selected as desired on the dashboard. Holes 6 have a relatively small diameter (such as not greater than 5-8 mm) and for example are disposed along a number of parallel lines, at a constant distance for each other along each line, and with the lines arranged at a constant distance from each other.

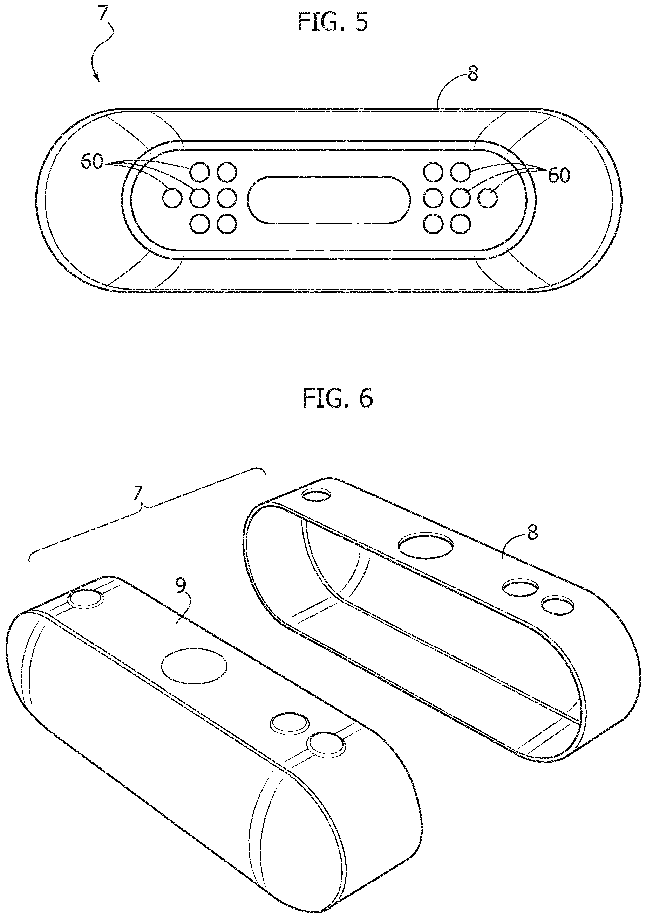

Figures 4-6 relate to an embodiment of one of said accessories, in the specific case an audio unit set, including a supporting container 8 provided for receiving therewithin an audio unit 9 of the type adapted to be connected in a wireless mode, for example in a Bluetooth mode, to a sound source. On its rear surface (figure 4) or on its lower surface, the supporting container 8 has a number of arrays of pins 60 which enable the audio unit 7 to be positioned in a horizontal position on the support surface 2A or in a vertical position on surface 2B.

According to a further feature, at least in some specific areas of the dashboard, the predetermined array of holes contains sub-groups of holes arranged according to a predetermined pattern and one or more of the accessories associated to the dashboard have pins arranged according to said predetermined pattern, so that said accessories can be positioned as desired in different positions on the dashboard, but anyhow always contained within specific areas of the dashboard. This is made in order to ensure that the safety requirements which govern the arrangement of accessories on the dashboard are duly observed.

Also according to a further feature of the invention, the distribution of holes on the dashboard may comprise sub-groups of holes in which one or more holes have a different cross-section from the cross-section of the other holes of the same sub-group and at least one of said accessories may have pins which have the same pattern as one or more of said sub-groups, with one or more pins which have cross-sections corresponding to said different cross-section, so that the accessory must be mounted within certain areas of the dashboard and with a determined orientation.

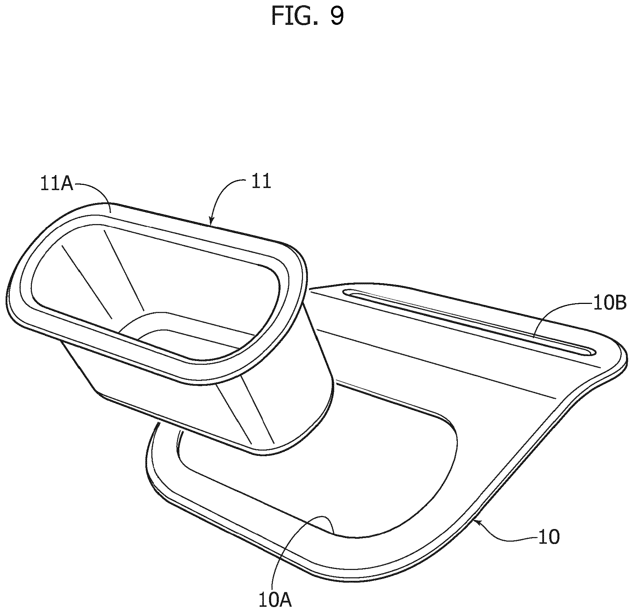

Figures 7-9 refer to a further example of an accessory which can be positioned on the dashboard, comprising a support 10, in form of a plate having one end portion provided with pins (not visible in the drawings) which are received within holes 6 of the dashboard and one opposite end portion projecting in a cantilever fashion from the dashboard and having an aperture 10A where a trinket container 11 (figure 8, 9) is received, which has an upper mouth provided with a projecting peripheral edge 11 A adapted to be supported on the upper surface of a support 10. Adjacent to its end portion connected to the dashboard 2, the support 10 also has a groove 10B which can be used for receiving a writing instrument (figure 8).

The accessories shown in figures 4-6 and 7-9 are naturally provided herein by way of non-limiting example. The dashboard can be further provided with various types of accessories, such as containers of various types, a support for a cellular phone, smartphone or tablet, a document holder, a support arm for supporting a videocamera, a bottle holder, an ashtray, etc.

Naturally, the configuration of the pins 60 (which are shown only diagrammatically in the annexed drawing) can be selected so as to ensure locking of the accessories on the dashboard. To this end, the pins 60 may be shaped in any known way and can be made of any suitable material.

Naturally, while the principle of the invention remains the same, the details of construction and the embodiments may widely vary with respect to what has been described and shown purely by way of example, without departing from the scope of the present invention.

## Claims

1. Vehicle including a dashboard (1), and a kit of accessories for said dashboard (1), wherein the dashboard (1) has a main wall (2) which has holes (6) provided for receiving coupling pins (60) of a plurality of accessories (7,10) of the dashboard (1), so that the dashboard (1) can be configured by the end user by arranging one or more accessories in positions on the dashboard (1) which can be selected as desired,
said vehicle being **characterized in that**:
- said main wall (2) defines a support surface (2A) which is substantially planar and horizontal, said surface extending, at its front side and at its two lateral sides, into a surface (2B) which progressively climbs upwardly.
- said holes (6) form ordered and substantially uniform arrays of holes arranged on said support surface (2A) and said upwardly climbing surface (2B),
- at least at some specific areas of the dashboard (1), the ordered arrays of holes (6) include sub-groups of holes (6) arranged according to predetermined patterns,
- one or more of said accessories have pins (60) arranged according to said predetermined patterns, so that said accessories can be positioned as desired in different positions on the dashboard, but always within said specific areas of the dashboard,
- the distribution of holes on the dashboard comprises sub-groups of holes in which one or more holes have a different cross-section from the cross-section of the other holes of the same sub-group and **in that** at least one of said accessories has pins which have the same pattern as that of one or more sub-groups, with one or more pins which have cross-sections corresponding to said different cross-section, so that the accessory must be mounted within determined areas of the dashboard and with a determined orientation.

2. Vehicle according to claim 1, **characterized in that** said kit of accessories includes a support (10) for a trinket container (11), an audio unit (7) provided for wireless connection to a sound source, a support for a cellular phone, smartphone apparatus, tablet or the like, a support for a videocamera.

3. Vehicle according to claim 1, **characterized in that** to the dashboard (1) there is associated an instrument panel (4) in the form of a separate unit, which is supported by a support arm (30) above, and at a distance from, to the structure of the dashboard (1).

## Patentansprüche

1. Fahrzeug, das ein Armaturenbrett (1) und einen Satz von Zubehörteilen für das Armaturenbrett (1) enthält, wobei das Armaturenbrett (1) eine Hauptwand (2) aufweist, die Löcher (6) hat, die zum Aufnehmen von Verbindungsstiften (60) einer Vielzahl von Zubehörteilen (7, 10) des Armaturenbretts (1) vorgesehen sind, so dass das Armaturenbrett (1) durch den Endbenutzer konfiguriert werden kann, indem ein oder mehrere Zubehörteil/e an Positionen an dem Armaturenbrett (1) angeordnet wird/werden, die wie gewünscht ausgewählt werden können,
wobei das Fahrzeug **dadurch gekennzeichnet ist, dass**:
- die Hauptwand (2) eine Ablagefläche (2A) aufweist, die im Wesentlichen eben und horizontal ist, und die Fläche an ihrer Vorderseite und an ihren beiden Längsseiten in eine Fläche (2B) übergeht, die allmählich nach oben ansteigt,
- die Löcher (6) geordnete und im Wesentlichen einheitliche Gruppen von Löchern bilden, die an der Ablagefläche (2A) und der nach oben ansteigenden Fläche (2B) angeordnet sind,
- wenigstens in bestimmten Bereichen des Armaturenbretts (1) die geordneten Gruppen von Löchern (6) Untergruppen von Löchern (6) umfassen, die in vorgegebenen Mustern angeordnet sind,
- eines oder mehrere der Zubehörteile Stifte (60) aufweisen, die in den vorgegebenen Mustern angeordnet sind, so dass die Zubehörteile wie gewünscht an verschiedenen Positionen an dem Armaturenbrett, jedoch stets innerhalb der bestimmten Bereiche des Armaturenbretts, angeordnet werden können,
- die Verteilung von Löchern an dem Armaturenbrett Untergruppen von Löchern umfasst, in denen ein oder mehrere Loch/Löcher einen Querschnitt hat/haben, der sich von dem Querschnitt der anderen Löcher derselben Untergruppe unterscheidet, und dass wenigstens eines der Zubehörteile Stifte, die dasselbe Muster wie das einer oder mehrerer Untergruppe/n haben, mit einem oder mehrere Stift/en aufweist, der/die Querschnitte hat/haben, die dem anderen Querschnitt entsprechen, so dass das Zubehörteil innerhalb festgelegter Bereiche des Armaturenbretts und mit einer festgelegten Ausrichtung angebracht werden muss.

2. Fahrzeug nach Anspruch 1, **dadurch gekennzeichnet, dass** der Satz von Zubehörteilen eine Halterung (10) für einen Behälter (11) für Kleinteile, eine Audio-Einheit (7), die zur drahtlosen Verbindung mit einer Tonquelle vorgesehen ist, eine Halterung für ein Mobiltelefon, ein Smartphone-Gerät, ein Tablet oder dergleichen, eine Halterung für eine Videokamera einschließt.

3. Fahrzeug nach Anspruch 1, **dadurch gekennzeichnet, dass** zu dem Armaturenbrett (1) eine Instrumententafel (4) in Form einer separaten Einheit gehört, die von einem oben befindlichen Tragarm (30) und in einem Abstand zu der Struktur des Armaturenbretts (1) getragen wird.

## Revendications

1. Véhicule comportant un tableau de bord (1), et un kit d'accessoires pour ledit tableau de bord (1), dans lequel le tableau de bord (1) a une paroi principale (2) qui présente des trous (6) prévus pour recevoir des broches d'accouplement (60) d'une pluralité d'accessoires (7, 10) du tableau de bord (1), de sorte que le tableau de bord (1) puisse être configuré par l'utilisateur final en agençant des positions sur le tableau de bord (1) d'un ou plusieurs accessoire(s), lesdites positions peuvant être sélectionnées comme souhaité,
ledit véhicule étant **caractérisé en ce que** :
- ladite paroi principale (2) définit une surface de support (2A) qui est sensiblement plane et horizontale, ladite surface s'étendant, à son côté avant et à ses deux côtés latéraux, dans une surface (2B) qui monte progressivement vers le haut.
- lesdits trous (6) forment des réseaux ordonnés et sensiblement uniformes de trous agencés sur ladite surface de support (2A) et ladite surface montant vers le haut (2B),
- au moins à certaines zones spécifiques du tableau de bord (1), les réseaux ordonnés de trous (6) comportent des sous-groupes de trous (6) agencés selon des motifs prédéterminés,
- un ou plusieurs desdits accessoires ont des broches (60) agencées selon lesdits motifs prédéterminés, de sorte que lesdits accessoires puissent être positionnés comme souhaité dans différentes positions sur le tableau de bord, mais toujours dans lesdites zones spécifiques du tableau de bord,
- la répartition des trous sur le tableau de bord comprend des sous-groupes de trous dans lesquels un ou plusieurs trou(s) a/ont une section transversale différente de la section transversale des autres trous du même sous-groupe et **en ce qu'**au moins un desdits accessoires a des broches qui ont le même motif que celui d'un ou de plusieurs sous-groupe(s), avec une ou plusieurs broche(s) qui a/ont des sections transversales correspondant à ladite section transversale différente, de sorte que l'accessoire doit être monté dans des zones déterminées du tableau de bord et selon une orientation déterminée.

2. Véhicule selon la revendication 1, **caractérisé en ce que** ledit kit d'accessoires comporte un support (10) pour un récipient de babiole (11), une unité audio (7) prévue pour une connexion sans fil à une source sonore, un support pour un téléphone cellulaire, un appareil de téléphone intelligent, une tablette ou autre analogue, un support pour une caméra vidéo.

3. Véhicule selon la revendication 1, **caractérisé en ce qu'**au tableau de bord (1), un panneau d'instrument (4) sous la forme d'une unité séparée est associé, lequel est supporté par un bras de support (30) au-dessus, et à distance, de la structure du tableau de bord (1).
